# EUROPÄISCHE PATENTANMELDUNG

(11) **EP 2 192 587 A1**
(43) Veröffentlichungstag der Anmeldung: **02.06.2010**
(21) Anmeldenummer: 09006701.8
(22) Anmeldetag: 28.09.2009
(51) Int. Cl.: G11B 23/40, G11B 23/42, G11B 23/44, G11B 23/38

(54) **Datenträger mit Ausschnitt**

(30) Priorität: 19.11.2008 DE 102008058234
(71) Anmelder: Michaelsen, Holger, 24866 Busdorf (DE)
(72) Erfinder: Michaelsen, Holger, 24866 Busdorf (DE)

(57) **Zusammenfassung**

Datenträger mit Ausschnitt in Form von Umrissen, Buchstaben und Formen oder dergleichen. Der Ausschnitt kann mit einem Foto ausgefüllt werden.

## Beschreibung

Ein integriertes Foto auf der Datenseite eines Datenträgers.

Datenträger üblicher Herstellungsart haben auf der Datenträgerseite kein Foto integriert. Mit der im Hauptanspruch angegebenen Erfindung wird erreicht, dass ein integriertes Foto auf der Datenseite erzielt wird.

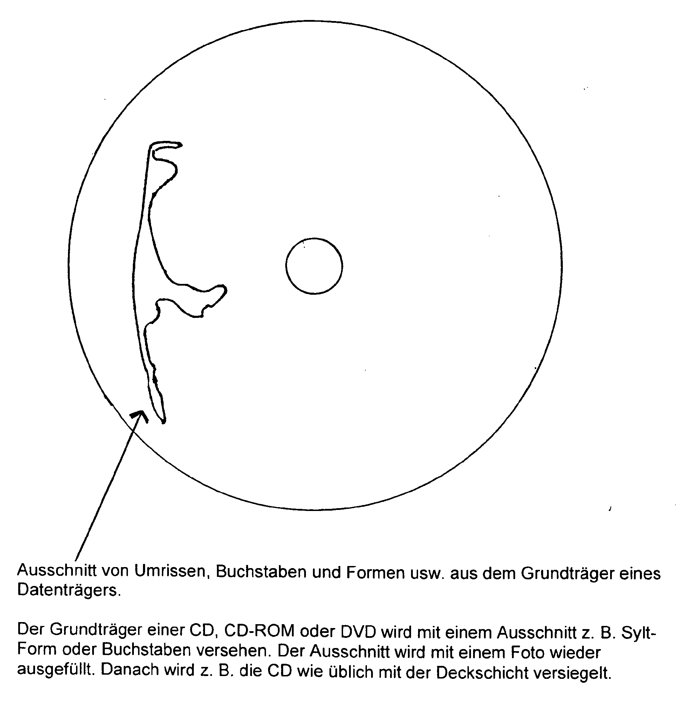

## Patentansprüche

**1.** Der Hauptanspruch dieser Erfindung beinhaltet, dass der Grundträger auf der Datenseite eines Datenträgers einer CD oder DVD vor der Versiegelung einen Ausschnitt von Umrissen, Buchstaben und Formen bekommt, wie z. B. Sylt-Ausschnittform.

**2.** Dieser maschinell hergestellte Ausschnitt wird mit einem Sylt-Foto (Draufsichtaufnahme) wieder ausgefüllt.

**3.** Danach wird der Grundträger mit dem Sylt-Foto (Draufsichtaufnahme) wie üblich mit einer transparenten Deckschicht (Laminierung) oder bei der industriell produzierten DVD wieder mit der Deckschicht versiegelt.
